# EUROPÄISCHE PATENTSCHRIFT

(11) **EP 1 513 977 B1**
(45) Veröffentlichungstag und Bekanntmachung des Hinweises auf die Patenterteilung: **18.04.2012**
(21) Anmeldenummer: 03735500.5
(22) Anmeldetag: 30.05.2003
(51) Int. Cl.: D06F 73/02, D06C 15/00, B60N 2/58

(54) **VERFAHREN ZUR BEHANDLUNG VON BEZUGSMATERIALIEN VON INNENAUSSTATTUNGSTEILEN, INSBESONDERE FÜR KRAFTFAHRZEUGE**
METHOD FOR THE TREATMENT OF COVERING MATERIALS FOR INTERIOR FITTING PIECES IN PARTICULAR FOR VEHICLE INTERIORS
PROCEDE POUR TRAITER DES MATIERES DE REVETEMENT DE PIECES D'EQUIPEMENT INTERIEUR EN PARTICULIER DE VEHICULES AUTOMOBILES

(30) Priorität: 05.06.2002 DE 10225084
(43) Veröffentlichungstag der Anmeldung: 16.03.2005
(73) Patentinhaber: Johnson Controls GmbH, 51399 Burscheid (DE)
(72) Erfinder: WURM, Henry, F-67480 Roeschwoog (FR)
(74) Vertreter: Hemmelmann, Klaus
(86) Internationale Anmeldenummer: PCT/EP2003/005689
(87) Internationale Veröffentlichungsnummer: WO 2003/103457

(56) Entgegenhaltungen:
- EP-A- 0 573 726
- DE-A- 3 627 940
- DE-A- 10 128 662
- US-B1- 6 405 461
- DATABASE WPI Section Ch, Week 198413 Derwent Publications Ltd., London, GB; Class F07, AN 1984-079611 XP002262785 -& JP 59 032492 A (TOKYO SHEET KK) 21. Februar 1984 (1984-02-21) & JP 59 032492 A (TOKYO SHEET KK) 21. Februar 1984 (1984-02-21)
- DATABASE WPI Section Ch, Week 198413 Derwent Publications Ltd., London, GB; Class F07, AN 1984-078037 XP002262786 -& JP 59 028992 A (TOKYO SHEET KK) 15. Februar 1984 (1984-02-15) & JP 59 028992 A (TOKYO SHEET KK) 15. Februar 1984 (1984-02-15)
- PATENT ABSTRACTS OF JAPAN Bd. 1999, Nr. 05, 31. Mai 1999 (1999-05-31) -& JP 11 042400 A (FUJI CAR MFG CO LTD), 16. Februar 1999 (1999-02-16) & JP 11 042400 A (FUJI CAR MFG CO LTD) 16. Februar 1999 (1999-02-16)
- PATENT ABSTRACTS OF JAPAN Bd. 2000, Nr. 13, 5. Februar 2001 (2001-02-05) -& JP 2000 303341 A (IKEDA BUSSAN CO LTD), 31. Oktober 2000 (2000-10-31) & JP 2000 303341 A (IKEDA BUSSAN CO LTD) 31. Oktober 2000 (2000-10-31)

## Beschreibung

Die Erfindung betrifft ein Verfahren zur Behandlung von Bezugsmaterialien von flächigen Verkleidungsteilen für den Fahrzeuginnenraum, insbesondere von Dachhimmeln, Tür- und Säulenverkleidungen oder Armaturentafeln, bei dem der Feuchtigkeitsgehalt des Bezugsmaterials temporär vergrößert wird, wobei die Fasern des Bezugsmaterials in einer Behandlungskammer durch Zufuhr von Feuchtigkeit aufgeweicht werden.

### Stand der Technik

Ein gattungsgemäßes Verfahren zur Behandlung von Kleidungsstücken ist aus der deutschen Offenlegungsschrift DE 36 27 940 A bekannt. Zur Durchführung des Verfahrens wird ein sogenannter Tunnelfinisher verwendet, welcher eine Dämpfkammer mit vorgeschalteter Befeuchtungskammer und nachgeordneter Trockenkammer aufweist. Die Kammern werden von den in eine Fördereinrichtung eingehängten Kleidungsstücken, beispielsweise aus Naturfasern, nacheinander durchfahren. Dabei wird Feuchtigkeitsgehalt des Bezugsmaterials temporär vergrößert, wobei die Fasern des Bezugsmaterials in der Befeuchtungskammer durch Zufuhr von Feuchtigkeit aufgeweicht werden. Die Kleidungsstücke glätten sich nachfolgend unter Schwerkraftwirkung oder Rückstellvermögen der Fasern. Darüber hinaus wirkt keine Reckkraft auf die Fasern ein.

Ein weiterer Tunnelfinisher wird in der europäischen Patentanmeldung EP 0 573 726 A1 beschrieben. Er besteht aus einem L-förmigen Durchlauftunnel, in dessen ersten Schenkel die in eine Fördereinrichtung eingehängten Kleidungsstücke zunächst durch gleichmäßiges Besprühen mit Dampf befeuchtet und dann mit rechtwinklig abzweigenden Schenkel getrocknet werden.

Ein Verfahren zur Behandlung von Bezugsmaterialien von Kraftfahrzeug-Innenausstattungsteilen ist aus der Praxis bekannt. Die für den Einbau in den Innenraum eines Kraftfahrzeugs vorgesehenen Sitze werden nach dem Zusammenbau der Metallstrukturen, deren Aufpolsterung sowie dem Überziehen der Polster mit einem Bezugsmaterial (beispielsweise Gewebe, Gewirke oder Leder) einer manuellen Behandlung mit Dampf unterzogen. Hierzu wird eine über einen Schlauch mit einem mobilen Dampferzeuger verbundene Düse auf diejenigen Bereiche des Sitzbezugs aufgesetzt, an denen sich beim Beziehen Falten oder Knicke gebildet haben. Unter der Wirkung des Dampfs sowie einer gegebenenfalls damit einhergehenden mechanischen Behandlung (Bügeln) wird der Sitzbezugs geglättet. Der Sitz steht nachfolgend für den Einbau in das Kraftfahrzeug bereit.

Dieses allgemein übliche Vorgehen erfordert einen hohen Personaleinsatz und ist darüber hinaus mit der Gefahr verbunden, dass bei der lokalen, intensiven Einwirkung des Dampfes örtlich unerwünschte Änderungen des Erscheinungsbilds des Sitzbezugs auftreten.

Ein anderes Verfahren zur Behandlung von Fahrzeugsitzen wird in der Druckschrift JP 59028992 offenbart.

### Aufgabe

Der Erfindung liegt die Aufgabe zugrunde, mit geringem Aufwand eine gleichmäßige Behandlung der Bezugsmaterialien herbeizuführen.

### Lösung

Die Aufgabe wird erfindungsgemäß dadurch gelöst, dass die Fasern nach dem Befeuchten unter der Wirkung einer das Bezugsmaterial dehnenden, von einer elastisch komprimierbaren Unterlage erzeugten Reckkraft geglättet werden.

Vorzugsweise beträgt der Feuchtegehalt der Fasern nach dem Anfeuchten in der Behandlungskammer zwischen 2 und 10 Gew.-%, bevorzugt etwa 5 Gew.%. Um ein optimales Behandlungsergebnis zu erzielen, kann der Feuchtegehalt der Fasern direkt oder indirekt gemessen werden, wobei das Anfeuchten bis zum Erreichen eines vorgegebenen Feuchtegehalts fortgesetzt wird.

Das Anfeuchten in der Behandlungskammer erfolgt mit Vorteil bei einer Lufttemperatur von 100 bis 150 °C, bevorzugt zwischen 125 und 130 °C. Dabei kann vorgesehen werden, dass die Oberflächentemperatur des Bezugsmaterial oder angebauter Zubehörteile gemessen und die Lufttemperatur und/oder die Behandlungszeit so eingestellt werden, dass eine zulässige Temperaturbelastung nicht überschritten wird. Vorzugsweise erfolgt die Feuchtigkeitszugabe in der Behandlungskammer durch Zufuhr von Dampf, insbesondere Wasserdampf. Dabei können dem Dampf Additive, insbesondere Geruchsstoffe, Glättungshilfsmittel oder fleckhemmende Zusatzstoffe beigefügt werden.

Nach einer bevorzugten Ausführung des Verfahrens wird die Reckkraft durch das Aufbringen des Bezugs auf eine elastisch komprimierbare Unterlage, insbesondere aus einem elastisch verformbaren Schaumwerkstoff, erzeugt. Das Bezugsmaterial kann dabei entweder nach dem Aufbringen auf die elastisch komprimierbare Unterlage in der Behandlungskammer angefeuchtet oder in der Behandlungskammer angefeuchtet und erst nachfolgend unter elastischer Kompression der Unterlage auf diese aufgebracht werden.

Vorzugsweise wird das Bezugsmaterial nach der Befeuchtung getrocknet, wobei der Feuchtegehalt der Fasern nach der Trocknung zwischen 0 und 1,0 Gew.-%, bevorzugt zwischen 0,05 und 0,25 Gew.-% betragen sollte.

Zur Reduzierung des Investitionsaufwand kann vorgesehen werden, dass die Trocknung in der gleichen Behandlungskammer wie das Befeuchten erfolgt. In Abhängigkeit von der Anzahl der zu behandelnden Bauteile ist es jedoch vorteilhaft, die Trocknung in einer sich an die Behandlungskammer für das Befeuchten anschließenden zweiten Behandlungskammer oder außerhalb der Behandlungskammer durchzuführen. Nach einem besonders vorteilhaften Verfahren werden die Feuchtigkeit der Fasern direkt oder indirekt gemessen und das Bezugsmaterial bis zum Erreichen einer vorgegebenen Restfeuchtigkeit getrocknet.

Zur Rationalisierung der Behandlung können mehrere zur Befeuchtung vorgesehene Bezüge, gegebenenfalls in Verbindung mit dem gesamten Innenausstattungsteil, auf einer Transporthilfseinrichtung, beispielsweise einer Palette gruppiert und gemeinsam der Behandlungskammer zugeführt werden.

Ein weitgehend automatisches Betreiben der Behandlungseinrichtung insbesondere bei stetig wechselndem Behandlungsgut läßt sich dadurch herbeiführen, dass das in der Behandlungskammer zu behandelnden Bezugsmaterials und/oder infolge unmittelbarer oder mittelbarer Verbindung mit diesem in der Behandlungskammer mitzubehandelnde Zubehörteile erkannt werden, nachfolgend für die Behandlung des Bezugsmaterials geeignete und/oder eine Beeinträchtigung der mitzubehandelnden Zubehörteile vermeidende Behandlungsparameter ausgewählt und das Bezugsmaterial und/oder mitzubehandelnde Zubehörteile unter Verwendung der ausgewählten Behandlungsparameter behandelt werden. Dabei sind mit Vorteil das zu behandelnde Bezugsmaterial, mit diesem mitzubehandelnde Zubehörteile und/oder eine gegebenenfalls verwendete Transporthilfseinrichtung mit Mitteln zur Identifizierung des Bezugsmaterials und/oder der Zubehörteile versehen. Diese Mittel zur Identifizierung ermöglichen vorzugsweise eine automatisierte Erkennung und umfassen beispielsweise einen Barcode und/oder eine Chipcodierung.

Bei Innenausstattungsteilen, die aus Komponenten mit unterschiedlicher Resistenz gegen Wärme und Feuchtigkeit bestehen, werden feuchtigkeits- und/oder temperaturempfindliche Bereiche des Bezugsmaterials oder Zubehörteile während der Behandlung in der Behandlungskammer bevorzugt abgedeckt. Ferner kann vorgesehen werden, dass feuchtigkeits- und/oder temperaturempfindliche Bereiche des Bezugsmaterials oder Zubehörteile während der Behandlung in der Behandlungskammer durch örtliche Reduzierung der Wirkung von Behandlungseinrichtungen geschützt oder erst nach der Behandlung des Bezugsmaterials in der Behandlungskammer mit diesem in unmittelbare oder mittelbare Verbindung gebracht werden.

Der für die Zufuhr der Feuchtigkeit bevorzugt eingesetzte Dampf kann beispielsweise über Düsen in die Behandlungskammer eingebracht werden. Dabei kann nach einer bevorzugten Ausführung der Erfindung die Kontur des zu behandelnden Bezugsmaterials ermittelt, ein vorgegebener Abstand zwischen den Düsen und dem Bezugsmaterial eingestellt und das Bezugsmaterials anschließend in der Behandlungskammer behandelt werden.

Das Ermitteln der Kontur erfolgt beispielsweise durch mechanisches Abtasten des Bezugsmaterials, alternativ jedoch auch berührungslos, insbesondere unter Verwendung von Ultraschall- oder Lasersensoren.

Das Bezugsmaterial in der Behandlungskammer kann mit Vorteil zusätzlich einer automatischen mechanischen Bearbeitung, insbesondere durch Bürsten oder Rollen unterzogen werden.

Die Aufgabe wird ferner gelöst durch ein nach diesem Verfahren behandeltes Innenausstattungsteil für ein Kraftfahrzeug, bei dem vorzugsweise unterhalb des Bezugsmaterials eine elastisch komprimierbare Unterlage, insbesondere aus einem elastisch verformbaren Schaumwerkstoff, angeordnet ist. Das Innenausstattungsteil kann beispielsweise einen elastisch gepolsterten Fahrzeugsitz und/oder elastisch gepolsterte Sitzanbauteile (Kopfstützen, Armlehnen oder dergleichen) mit einem Polsterbezug umfassen, jedoch auch ein flächiges Verkleidungsteil für den Fahrzeuginnenraum mit einem starren Träger, einem Bezugsmaterial und einer zwischen Träger und Bezugsmaterial angeordneten Polsterschicht, insbesondere einen Dachhimmel, eine Tür- oder Säulenverkleidung oder eine Armaturentafel.

### Figuren

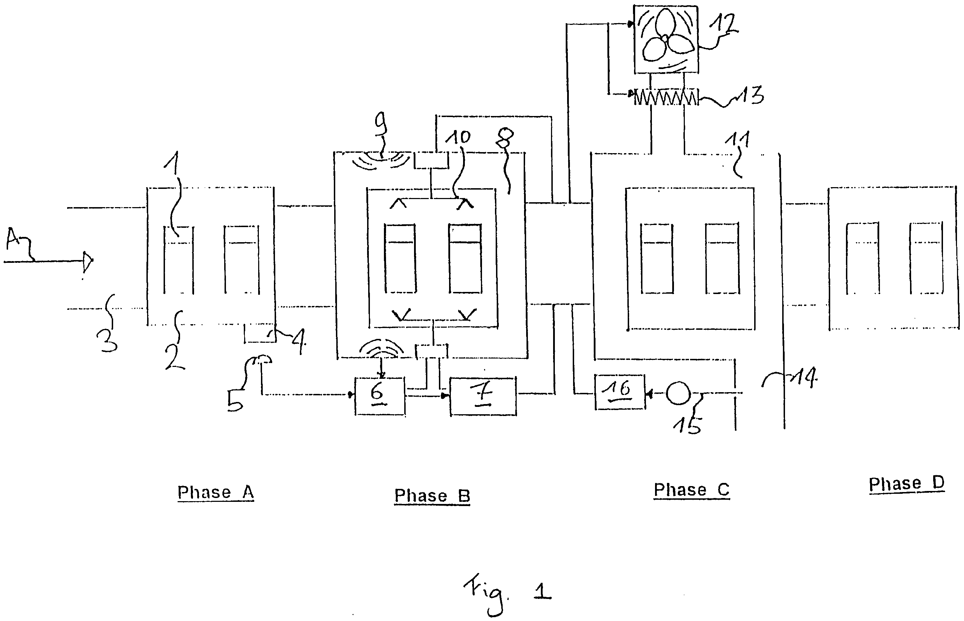

Die einzige Figur stellt beispielhaft und schematisch einen erfindungsgemäßen Verfahrensablauf am Beispiel der Behandlung von Fahrzeugsitzen dar und findet entsprechend auch bei der Behandlung von flächigen Verkleidungsteilen für den Fahrzeuginnenraum, insbesondere von Dachhimmeln, Tür- und Säulenverkleidungen oder Armaturentafeln, Anwendung.

Die bereits mit dem Sitzbezug versehenen, in Aufsicht erkennbaren Fahrzeugsitze 1 werden vor der Behandlung auf einer Transporthilfseinrichtung in Form einer Palette 2 gruppiert und ausgerichtet, die mittels einer Transporteinrichtung 3 in Richtung des Pfeils A durch die Fertigungshalle bewegbar ist. Seitlich an der Palette 2 ist ein programmierbarer Chip 4 angebracht, in dem Informationen über das jeweilige Transportgut gespeichert sind, beispielsweise zum verwendeten Bezugsmaterial oder über spezielle Ausstattungsmerkmale der Fahrzeugsitze 1. Diese Informationen können bereits zur Lenkung vorhergehender Fertigungsabläufe herangezogen werden.

Die im Chip hinterlegten Informationen werden mittels einer Leseeinrichtung 5 ausgelesen und an einen Rechner 6 weitergeleitet, der auf dieser Grundlage aus zuvor hinterlegten Behandlungsparametern, beispielsweise für Temperatur, Luftfeuchtigkeit oder Behandlungsdauer, geeignete Werte auswählt und an einen Dampferzeuger 7 weitergibt (Phase A). Die Palette wird nachfolgend in eine erste Behandlungskammer 8 transportiert, in der mittels Ultraschallsensoren 9 die Kontur der Fahrzeugsitze 1 festgestellt wird. Die Meßwerte werden ebenfalls dem Rechner 6 mitgeteilt, der anschließend die motorisch verstellbaren Dampfdüsen 10 bis auf einen vorgegebenen Abstand an die Fahrzeugsitze 1 heranfährt. In der Behandlungskammer 8 erfolgt nun mittels Zufuhr eines erhitzten Luft/Dampf-Gemisches aus dem Dampferzeuger 7 die Behandlung des Bezugsmaterials durch temporäre Vergrößerung seines Feuchtigkeitsgehalt, wobei die Fasern durch die Zufuhr von Feuchtigkeit aufweichen (Phase B). Unter der Wirkung einer das Bezugsmaterial dehnenden Reckkraft, die durch die Kompression des Sitzpolsters und der damit verbundenen Aufbringung von Zugspannungen in das Bezugsmaterial erzeugt wird, findet ein automatischer Glättungsprozess statt.

Nach Ablauf der für die Behandlung der betreffenden Fahrzeugsitze vorgesehenen Behandlungszeit wird die Palette 2 in eine weitere Behandlungskammer 11 weiterbefördert (Phase C), in der das Bezugsmaterial sowie die Fahrzeugsitze insgesamt getrocknet werden. Hierzu wird in die Behandlungskammer 11 mittels eines Gebläses 12 und einer Heizung 13 Heißluft eingeblasen, die auf der gegenüberliegenden Seite der Behandlungskammer 11 über einen Auslassstutzen 14 wieder einweicht. Im Auslassstutzen 14 ist ein Feuchtigkeitssensor 15 angeordnet, der den Feuchtegehalt der entweichenden Luft mißt und an einen Rechner 16 weiterleitet. Der Trocknungsprozess wird erst beendet, wenn die gemessene Feuchtigkeit einen vorgegebenen Wert erreicht hat. Nachfolgend wird die Palette 2 aus der Behandlungskammer 11 herausgefahren (Phase D). Die Fahrzeugsitze können jetzt zum Einbau in das zugeordnete Kraftfahrzeug weiterbefördert werden.

### Bezugszeichen

- 1: Fahrzeugsitz
- 2: Palette
- 3: Transporteinrichtung
- 4: Chip
- 5: Leseeinrichtung
- 6: Rechner
- 7: Dampferzeuger
- 8: Behandlungskammer
- 9: Ultraschallsensor
- 10: Dampfdüse
- 11: Behandlungskammer
- 12: Gebläse
- 13: Heizung
- 14: Auslassstutzen
- 15: Feuchtigkeitssensor
- 16: Rechner

## Patentansprüche

1. Verfahren zur Behandlung von Bezugsmaterialien von flächigen Verkleidungsteilen für den Fahrzeuginnenraum, insbesondere von Dachhimmeln, Tür- und Säulenverkleidungen oder Armaturentafeln, bei dem der Feuchtigkeitsgehalt des Bezugsmaterials temporär vergrößert wird, wobei die Fasern des Bezugsmaterials in einer Behandlungskammer (8) durch Zufuhr von Feuchtigkeit aufgeweicht werden, **dadurch gekennzeichnet, dass** die Fasern unter der Wirkung einer das Bezugsmaterial dehnenden, von einer elastisch komprimierbaren Unterlage erzeugten Reckkraft geglättet werden.

2. Verfahren nach Anspruch 1, **dadurch gekennzeichnet, dass** der Feuchtegehalt der Fasern nach dem Anfeuchten in der Behandlungskammer (11) zwischen 2 und 10 Gew.-%, bevorzugt etwa 5 Gew.-%, beträgt.

3. Verfahren nach Anspruch 1 oder 2, **dadurch gekennzeichnet, dass** der Feuchtegehalt der Fasern direkt oder indirekt gemessen und das Anfeuchten bis zum Erreichen eines vorgegebenen Feuchtegehalts fortgesetzt wird.

4. Verfahren nach einem der Ansprüche 1 bis 3, **dadurch gekennzeichnet, dass** das Anfeuchten in der Behandlungskammer (8) bei einer Lufttemperatur von 100 bis 150 °C, bevorzugt zwischen 125 und 130 °C erfolgt.

5. Verfahren nach einem der vorhergehenden Ansprüche, **dadurch gekennzeichnet, dass** die Feuchtigkeitszugabe in der Behandlungskammer (8) durch Zufuhr von Dampf, insbesondere Wasserdampf erfolgt.

6. Verfahren nach Anspruch 5, **dadurch gekennzeichnet, dass** dem Dampf Additive, insbesondere Geruchsstoffe, Glättungshilfsmittel oder fleckhemmende Zusatzstoffe beigefügt werden.

7. Verfahren nach einem der vorhergehenden Ansprüche, **dadurch gekennzeichnet, dass** die Reckkraft durch das Aufbringen des Bezugsmaterials auf dic, elastisch komprimierbare Unterlage, insbesondere aus einem elastisch verformbaren Schaumwerkstoff, erzeugt wird, welche auf einem starren Träger angeordnet ist.

8. Verfahren nach Anspruch 7, **dadurch gekennzeichnet, dass** das Bezugsmaterial nach dem Aufbringen auf die elastisch komprimierbare Unterlage in der Behandlungskammer (8) angefeuchtet wird.

9. Verfahren nach Anspruch 7, **dadurch gekennzeichnet, dass** das Bezugsmaterial in der Behandlungskammer (8) angefeuchtet und nachfolgend unter elastischer Kompression der Unterlage auf diese aufgebracht wird.

10. Verfahren nach einem der vorhergehenden Ansprüche, **dadurch gekennzeichnet, dass** das Bezugsmaterial nach der Befeuchtung getrocknet wird.

11. Verfahren nach Anspruch 10, **dadurch gekennzeichnet, dass** der Feuchtegehalt der Fasern nach der Trocknung zwischen 0 und 1,0 Gew.-%, bevorzugt zwischen 0,05 und 0,25 Gew.-% beträgt.

12. Verfahren nach Anspruch 10 oder 11, **dadurch gekennzeichnet, dass** die Trocknung in der gleichen Behandlungskammer (8) wie das Befeuchten erfolgt.

13. Verfahren nach Anspruch 10 oder 11, **dadurch gekennzeichnet, dass** die Trocknung in einer sich an die Behandlungskammer (8) für das Befeuchten anschließenden zweiten Behandlungskammer (11) erfolgt.

14. Verfahren nach Anspruch 10 oder 11, **dadurch gekennzeichnet, dass** die Trocknung außerhalb der Behandlungskammer (8) erfolgt.

15. Verfahren nach einem der Ansprüche 10 bis 14, **dadurch gekennzeichnet, dass** die Feuchtigkeit der Fasern direkt oder indirekt gemessen und das Bezugsmaterial bis zum Erreichen einer vorgegebenen Restfeuchtigkeit getrocknet wird.

16. Verfahren nach einem der vorhergehenden Ansprüche, **dadurch gekennzeichnet, dass** mehrere zur Befeuchtung vorgesehene Bezüge auf einer Transporthilfseinrichtung, insbesondere einer Palette gruppiert und gemeinsam der Behandlungskammer zugeführt werden.

17. Verfahren nach einem der vorhergehenden Ansprüche, **gekennzeichnet durch** die Schritte:
- Ermitteln des in der Behandlungskammer (8) zu behandelnden Bezugsmaterials und/oder infolge unmittelbarer oder mittelbarer Verbindung mit diesem in der Behandlungskammer (8) mitzubehandelnder Zubehörteile
- Auswahl von für die Behandlung des Bezugsmaterials geeigneten und/oder eine Beeinträchtigung der mitzubehandelnden Zubehörteile vermeidenden Behandlungsparametern
- Behandlung des Bezugsmaterials und/oder der mitzubehandelnden Zubehörteile unter Verwendung der ausgewählten Behandlungsparameter.

18. Verfahren nach Anspruch 17, **dadurch gekennzeichnet, dass** das zu behandelnde Bezugsmaterial, mit diesem mitzubehandelnde Zubehörteile und/oder eine gegebenenfalls verwendete Transporthilfseinrichtung mit Mitteln zur Identifizierung des Bezugsmaterials und/oder der Zubehörteile versehen sind.

19. Verfahren nach Anspruch 18, **dadurch gekennzeichnet, dass** die Mittel zur Identifizierung eine automatisierte Erkennung ermöglichen.

20. Verfahren nach Anspruch 19, **dadurch gekennzeichnet, dass** die Mittel zur Identifizierung einen Barcode und/oder eine Codierung auf einem Chip (4) umfassen.

21. Verfahren nach einem der vorhergehenden Ansprüche, **dadurch gekennzeichnet, dass** feuchtigkeits- und/oder temperaturempfindliche Bereiche des Bezugsmaterials oder der Zubehörteile während der Behandlung in der Behandlungskammer (8, 11) abgedeckt werden.

22. Verfahren nach einem der vorhergehenden Ansprüche, **dadurch gekennzeichnet, dass** feuchtigkeits- und/oder temperaturempfindliche Bereiche des Bezugsmaterials oder Zubehörteile während der Behandlung in der Behandlungskammer (8, 11) durch örtliche Reduzierung der Wirkung von Behandlungseinrichtungen geschützt werden.

23. Verfahren nach einem der vorhergehenden Ansprüche, **dadurch gekennzeichnet, dass** feuchtigkeits- und/oder temperaturempfindliche Zubehörteile erst nach der Behandlung des Bezugsmaterials in der Behandlungskammer (8, 11) mit diesem in unmittelbare oder mittelbare Verbindung gebracht werden.

24. Verfahren nach einem der Ansprüche 5, **dadurch gekennzeichnet, dass** der Dampf über Dampfdüsen (10) in die Behandlungskammer (8) eingebracht wird.

25. Verfahren nach Anspruch 24, **gekennzeichnet durch** die Schritte:
- Ermitteln der Kontur des zu behandelnden Bezugsmaterials
- Einstellung eines vorgegebenen Abstands zwischen den Dampfdüsen (10) und dem Bezugsmaterial
- Behandeln des Bezugsmaterials in der Behandlungskammer (8).

26. Verfahren nach Anspruch 25, **dadurch gekennzeichnet, dass** das Ermitteln der Kontur durch mechanisches Abtasten des Bezugsmaterials erfolgt.

27. Verfahren nach Anspruch 25, **dadurch gekennzeichnet, dass** das Ermitteln der Kontur berührungslos, insbesondere unter Verwendung von Ultraschall- oder Lasersensoren erfolgt.

28. Verfahren nach einem der vorhergehenden Ansprüche, **dadurch gekennzeichnet, dass** das Bezugsmaterial in der Behandlungskammer (8, 11) zusätzlich einer automatischen mechanischen Bearbeitung, insbesondere durch Bürsten oder Rollen unterzogen wird.

## Claims

1. Method for the treatment of covering materials of extensive pieces of trim for the vehicle interior, in particular for roof linings, door and pillar trims or dashboards, in which the moisture content of the covering material is temporarily increased, the fibers of the covering material being softened in a treatment chamber (8) by the supply of moisture, **characterized in that** the fibers are smoothed by the action of a drawing force which extends the covering material and is produced by an elastically compressible base.

2. Method according to Claim 1, **characterized in that** the moisture content of the fibers after the moistening in the treatment chamber (11) is between 2 and 10% by weight, preferably approximately 5% by weight.

3. Method according to Claim 1 or 2, **characterized in that** the moisture content of the fibers is measured directly or indirectly and the moistening is continued until a predetermined moisture content is reached.

4. Method according to one of Claims 1 to 3, **characterized in that** the moistening in the treatment chamber (8) takes place at an air temperature of 100 to 150°C, preferably between 125 and 130°C.

5. Method according to one of the preceding claims, **characterized in that** the addition of moisture to the treatment chamber (8) takes place by the supply of steam, in particular water vapor.

6. Method according to Claim 5, **characterized in that** additives, in particular odorous substances, moving auxiliaries or stain-inhibiting addition agents are added to the steam.

7. Method according to one of the preceding claims, **characterized in that** the drawing force is produced by depositing the covering material onto the elastically compressible base, in particular composed of an elastically deformable foam material, which base is arranged on a rigid support.

8. Method according to Claim 7, **characterized in that** the covering material is moistened in the treatment chamber (8) after depositing it onto the elastically compressible base.

9. Method according to Claim 7, **characterized in that** the covering material is moistened in the treatment chamber (8) and subsequently is deposited onto the base with elastic compression of the latter.

10. Method according to one of the preceding claims, **characterized in that** the covering material is dried after the moistening.

11. Method according to Claim 10, **characterized in that** the moisture content of the fibers after the drying is between 0 and 1.0% by weight, preferably between 0.05 and 0.25% by weight.

12. Method according to Claim 10 or 11, **characterized in that** the drying takes place in the same treatment chamber (8) as the moistening.

13. Method according to Claim 10 or 11, **characterized in that** the drying takes place in a second treatment chamber (11) following the treatment chamber (8) for the moistening.

14. Method according to Claim 10 or 11, **characterized in that** the drying takes place outside the treatment chamber (8).

15. Method according to one of Claims 10 to 14, **characterized in that** the moisture of the fibers is measured directly or indirectly and the covering material is dried until a predetermined residual moisture is reached.

16. Method according to one of the preceding claims, **characterized in that** a plurality of covers provided for moistening are grouped on a transport auxiliary device, in particular a pallet, and are supplied together to the treatment chamber.

17. Method according to one of the preceding claims, **characterized by** the steps:
- determination of the covering material to be treated in the treatment chamber (8) and/or accessory parts to be treated at the same time in the treatment chamber (8) as a consequence of being directly or indirectly connected to said covering material
- selection of treatment parameters which are suitable for the treatment of the covering material and/or avoid damaging the accessory parts to be treated at the same time
- treatment of the covering material and/or accessory parts to be treated at the same time using the selected treatment parameters.

18. Method according to Claim 17, **characterized in that** the covering material to be treated, accessory parts to be treated at the same time as the latter and/or a transport auxiliary device (used if appropriate) are provided with means for identifying the covering material and/or the accessory parts.

19. Method according to Claim 18, **characterized in that** the identification means permit an automated recognition.

20. Method according to Claim 19, **characterized in that** the identification means comprise a bar code and/or a coding on a chip (4).

21. Method according to one of the preceding claims, **characterized in that** moisture- and/or temperature-sensitive regions of the covering material or the accessory parts are covered during the treatment in the treatment chamber (8, 11).

22. Method according to one of the preceding claims, **characterized in that** moisture- and/or temperature-sensitive regions of the covering material or accessory parts are protected during the treatment in the treatment chamber (8, 11) by localized reduction of the effect of treatment devices.

23. Method according to one of the preceding claims, **characterized in that** moisture- and/or temperature-sensitive accessory parts are brought into direct or indirect connection with the covering material only after treatment of the latter in the treatment chamber (8, 11).

24. Method according to Claim 5, **characterized in that** the steam is introduced into the treatment chamber (8) via steam nozzles (10).

25. Method according to Claim 24, **characterized by** the steps:
- determination of the contour of the covering material to be treated
- setting a predetermined distance between the steam nozzles (10) and the covering material
- treatment of the covering material in the treatment chamber (8).

26. Method according to Claim 25, **characterized in that** the determination of the contour takes place by mechanical scanning of the covering material.

27. Method according to Claim 25, **characterized in that** the determination of the contour takes place without contact, in particular using ultrasonic or laser sensors.

28. Method according to one of the preceding claims, **characterized in that** the covering material is additionally subjected in the treatment chamber (8, 11) to automatic mechanical processing in particular by means of brushes or rollers.

## Revendications

1. Procédé de traitement de matériaux de revêtement de pièces plates d'alliage d'habitacles de véhicules, en particulier de toits, d'habillages de portes et de montants ou de tableaux de bord, dans lequel la teneur en humidité du matériau de revêtement est temporairement augmentée, les fibres du matériau de revêtement étant amollies dans une chambre de traitement (8) par apport d'humidité,
**caractérisé en ce que**
les fibres sont lissées sous l'effet d'une force de traction qui allonge le matériau de revêtement et qui est exercée par un soubassement élastiquement compressible.

2. Procédé selon la revendication 1, **caractérisé en ce que** la teneur en humidité des fibres après leur humidification dans la chambre de traitement (11) est comprise entre 2 et 10 % en poids et de préférence est d'environ 5 % en poids.

3. Procédé selon les revendications 1 ou 2, **caractérisé en ce que** la teneur en humidité de fibres est mesurée directement ou indirectement et **en ce que** l'humidification est poursuivie jusqu'à ce qu'une teneur en humidité prédéterminée soit atteinte.

4. Procédé selon l'une des revendications 1 à 3, **caractérisé en ce que** l'humidification dans la chambre de traitement (8) s'effectue à une température d'air de 100 à 150°C et de préférence comprise entre 125 et 130°C.

5. Procédé selon l'une des revendications précédentes, **caractérisé en ce que** l'apport d'humidité dans la chambre (8) de traitement s'effectue par apport de vapeur et en particulier par apport de vapeur d'eau.

6. Procédé selon la revendication 5, **caractérisé en ce que** des additifs, en particulier des substances parfumées, des adjuvants de lissage ou des additifs anti-tache sont ajoutés à la vapeur.

7. Procédé selon l'une des revendications précédentes, **caractérisé en ce que** la force de traction est appliquée en appliquant le matériau de revêtement sur un soubassement élastiquement comprimable, en particulier en un matériau moussé élastiquement déformable disposé sur un support rigide.

8. Procédé selon la revendication 7, **caractérisé en ce que** le matériau de revêtement est humidifié dans la chambre de traitement (8) après avoir été appliqué sur le soubassement élastiquement compressible.

9. Procédé selon la revendication 7, **caractérisé en ce que** le matériau de revêtement est humidifié dans la chambre de traitement (8) et est ensuite appliqué sur le soubassement en comprimant élastiquement ce dernier.

10. Procédé selon l'une des revendications précédentes, **caractérisé en ce que** le matériau de revêtement est séché après l'humidification.

11. Procédé selon la revendication 10, **caractérisé en ce que** la teneur en humidité des fibres après le séchage est comprise entre 0 et 1,0 % en poids et de préférence entre 0,05 et 0,25 % en poids.

12. Procédé selon les revendications 10 ou 11, **caractérisé en ce que** le séchage s'effectue dans la même chambre de traitement (8) que l'humidification.

13. Procédé selon les revendications 10 ou 11, **caractérisé en ce que** le séchage s'effectue dans une deuxième chambre de traitement (11) qui suit la chambre de traitement (8) prévue pour l'humidification.

14. Procédé selon les revendications 10 ou 11, **caractérisé en ce que** le séchage s'effectue hors de la chambre de traitement (8).

15. Procédé selon l'une des revendications 10 à 14, **caractérisé en ce que** l'humidité des fibres est mesurée directement ou indirectement et **en ce que** le matériau de revêtement est séché jusqu'à ce qu'il atteigne une humidité résiduelle prédéterminée.

16. Procédé selon l'une des revendications précédentes, **caractérisé en ce que** plusieurs revêtements prévus pour être humidifiés sont apportés en groupe ou ensemble dans la chambre de traitement sur un dispositif auxiliaire de transport, en particulier une palette.

17. Procédé selon l'une des revendications précédentes, **caractérisé par** les étapes consistant à :
- déterminer le matériau de revêtement à traiter dans la chambre de traitement (8) et/ou des pièces auxiliaires à traiter conjointement dans la chambre de traitement (8) du fait de leur liaison directe ou indirecte avec ce matériau de revêtement,
- sélectionner les paramètres de traitement qui conviennent pour le traitement du matériau de revêtement et/ou qui empêchent que les pièces auxiliaires à traiter conjointement soient endommagées
et
- traitement du matériau de revêtement et/ou des pièces auxiliaires à traiter conjointement en recourant aux paramètres sélectionnés de traitement.

18. Procédé selon la revendication 17, **caractérisé en ce que** le matériau de revêtement à traiter, les pièces auxiliaires à traiter avec ce dernier et/ou un dispositif auxiliaire de transport éventuellement utilisé sont dotés de moyens d'identification du matériau de revêtement et/ou des pièces auxiliaires.

19. Procédé selon la revendication 18, **caractérisé en ce que** les moyens d'identification permettent une détection automatisée.

20. Procédé selon la revendication 19, **caractérisé en ce que** les moyens d'identification comprennent un code à barres et/ou un code prévu sur une puce (4).

21. Procédé selon l'une des revendications précédentes, **caractérisé en ce que** les parties sensibles à l'humidité et/ou à la chaleur du matériau de revêtement ou des pièces accessoires sont recouvertes pendant le traitement dans la chambre de traitement (8, 11).

22. Procédé selon l'une des revendications précédentes, **caractérisé en ce que** les parties sensibles à l'humidité et/ou à la chaleur du matériau de revêtement ou des pièces accessoires sont protégées pendant le traitement dans la chambre de traitement (8, 11) par réduction locale de l'effet de dispositifs de traitement.

23. Procédé selon l'une des revendications précédentes, **caractérisé en ce que** les pièces accessoires sensibles à l'humidité et/ou à la chaleur ne sont reliées directement ou indirectement au matériau de revêtement qu'après le traitement de ce dernier dans la chambre de traitement (8, 11).

24. Procédé selon la revendication 5, **caractérisé en ce que** la vapeur est apportée dans la chambre de traitement (8) par des tuyères (10) à vapeur.

25. Procédé selon la revendication 24, **caractérisé par** les étapes consistant à :
- déterminer le contour du matériau de revêtement à traiter,
- établir une distance prédéterminée entre les tuyères (10) à vapeur et le matériau de revêtement et
- traiter le matériau de revêtement dans la chambre de traitement (8).

26. Procédé selon la revendication 25, **caractérisé en ce que** la détermination du contour s'effectue par palpage mécanique du matériau de revêtement.

27. Procédé selon la revendication 25, **caractérisé en ce que** la détermination du contour s'effectue sans contact, en particulier en utilisant des sondes à ultrasons ou des sondes laser.

28. Procédé selon l'une des revendications précédentes, **caractérisé en ce que** le matériau de revêtement subit en supplément un traitement mécanique automatique, en particulier par des brosses ou des rouleaux, dans la chambre de traitement (8, 11).
